# EUROPEAN PATENT APPLICATION

(11) **EP 3 620 949 A1**
(43) Date of publication of application: **11.03.2020**
(21) Application number: 17908578.2
(22) Date of filing: 05.07.2017
(51) Int. Cl.: G06K 9/00, G06Q 50/18

(54) **REMOTE VIDEO IDENTIFICATION SYSTEM FOR IDENTIFYING PHYSICAL PEOPLE AND REMOTE VIDEO IDENTIFICATION METHOD USING THE SAME**

(30) Priority: 03.05.2017 ES 201730651
(71) Applicant: Electronic Identification, SL, 28005 Madrid (ES)
(72) Inventor: NAVALÓN, Iván, 28005 Madrid (ES)
(74) Representative: Sahuquillo Huerta, Jesús
(86) International application number: PCT/ES2017/070486
(87) International publication number: WO 2018/202927

(57) **Abstract**

The invention relates to a remote video identification system for identifying people, which comprises: an interface for connecting a piece of software operating in a browser of an Internet-connected device; detection means formed by a camera of the device, and software comprising a first algorithm suitable for obtaining biometric patterns from a photograph and from a person's face and for confirming that the person is alive and not under duress; and verification means with optical scanning means and control means formed by a second algorithm with artificial intelligence. The method for remotely identifying physical people by means of this system comprises the steps of: connecting (1), by a person, to the software and requesting video identification; capturing and verifying (2) data from the front and back of a document and from the person; and concluding (13) the authenticity or falseness of the document.

## Description

### Technical Field of the Invention

The present invention corresponds to the technical field of remote identification systems for identifying physical people, which intend to verify the authenticity of an identification document of said physical person as true source of identity, by detection means of said document and, verification means of the security measures thereof, as well as that the person is alive and not under duress during the identification process.

### Background of the Invention

At present there is a progressive development of identification systems for people, which are necessary in order to verify said identity before performing certain procedures before official agencies, financial entities and the like.

For the identification of physical people, the authenticity of an identification document of the person and the confirmation that said document belongs to the person claiming identification, must be verified.

Until now, the identification had to be done in person, thus it was necessary for the interested person to appear with his/her document before the particular entity, in order to make at that time the relevant document verification confirmations, before being capable of performing any relevant procedure.

These days when since the advent of the Internet, the current trend is toward a disappearance of borders and distances, and with which one person may be interested for example in performing financial procedures with an entity not necessarily located in the same city, state or even country as the person performing said procedure, a mandatory physical presence for making a procedure slows the financial, commercial or any other type of operations.

This way, the physical presence required in the identification process is an obstacle in the fluid relation between physical people and entities of any type, but at the same time, it is necessary while there is no way of making a safe identification of said person.

In the state of the art, there are complicated systems, which make document identification by using a series of software and hardware devices, which complicate their operation, and, in most cases, they also need the person's physical presence.

As an example of the state of the art, reference documents EP3018606, US2016162729, WO2016061292 and WO2011058418 may be cited.

Reference document EP3018606 defines an improved security system and method for the recognition and verification of identification documents by using a processor, consisting of a mobile phone, which has a device for reading documents, capable of identifying special characters and the different types of existing fonts, and a video camera, webcam, for capturing the image of the holder of the document.

The processor collects the data from the different fields of the document, fills out a registration form, after confirming one or more elements, and proceeds to send the same in encrypted form to a regulatory authority. The system is capable of reading the data from an electronic chip incorporated in the identification document, which has among other things images of the user's photograph and signature, and of verifying both through the corresponding devices.

In this case, this system needs a specialized hardware comprised of said mobile phone and includes an additional hardware as an identification document reader in order to read and obtain information from the document itself. This implies that the recognition of the person must be made in physical presence of the person, since said specialized hardware is necessary.

Thus, this system is not capable of making a remote verification, since this is a specific hardware, which includes an identification document reader, to read and obtain information from the document itself.

This system is only capable of identifying the identification document by a data validation and authenticity verification process, but it does not allow detecting if the person to whom said document belongs is alive at that time, nor does it allow to verify the comparison of the person claiming his/her identity with the true identity provided by an identification document issued by a government.

Reference document US2016162729 defines a system and method to verify the identity of people in distance transactions, by capturing the image from an identification document and from a video with the holder's face. By the analysis of these images, it is firstly determined if these correspond to a living person and then the image of the identification document photograph is compared to the one captured in the video in order to proceed to the verification and validation thereof.

In this case, a confirmation that the person to whom the document belongs is alive at the time of verification is in fact made, but there are certain security gaps, since the processor may be configured to receive an image of an identification document associated by the user and, said image may be captured by a camera from a device associated with the user or selected by him/her from the images stored in his/her device. Thus, this system only uses an image to verify the authenticity, but this image may be taken at any time, thus not ensuring its validity and integrity in the document verification method.

Therefore, this system is not capable of demonstrating the process integrity, since it separates an image from the identification document and compares the same with images from the person's face in several processes.

The system is not qualified to nor oriented towards offering a high-level identification document authenticity verification, since it is possible to visualize all security measures of an identification document from a single image, such as watermarks, metal of the chip, cryptograms, or other variable optics security measures. Thus, this system has a low-level accuracy. This system has no control over where images are taken or videos are recorded nor the quality thereof. This lack of control of the time photographs are taken or videos are recorded gives room to tampering the documents or videos before treatment.

Reference document WO2016061292 defines a system and method to capture images and to read/translate the information incorporated in the identification documents in security zones such as airports, borders and so on by cameras integrated in mobile devices. The system facilitates the quick capture of MRZ text zone with no need to control the ambient light.

In this case, this system is intended only for the in-person identification document verification process, thus this is not valid for a remote authentication before agencies or entities.

Reference document WO2011058418 defines a system and method to read and validate identification documents through the camera of a portable device exclusively under the visible light spectrum. It allows to automatically correct perspective distortions caused by a wrong positioning of the document (distance, orientation) relative to the camera.

In this case, this is a system, which allows only the identification document reading and validation process, but it does not confirm if the person to whom the document belongs is alive at the time of identification and if the person corresponds to the identity claimed in the document.

Therefore, at present there is no document identification system and process, which remotely makes the authentication of said document and confirms at the same time that the person to whom the document belongs is alive at that time, he/she corresponds to the identity claimed and with acceptable security conditions equivalent to the process traditionally made in person.

### Description of the Invention

The remote video identification system for identifying physical people, comprising detection means of an identification document of said physical person, this being any document having a photograph of said physical person and at least one security measure and verification means of said identification document herein provided, comprises a connection interface between a system identification software operating at the browser of a device of the physical person, connected to the Internet.

In this video identification system, the detection means comprise at least one camera associated with said device of the person, subject to making a video recording of the identification document and of the biometric data or features of the physical person's face and wherein the system software comprises a first algorithm suitable for obtaining electronic data of said recording, to take a first biometric pattern of the document photograph, a second biometric pattern of the physical person's face and a confirmation that the person is alive at the time of recording and not under duress.

Likewise, the interface is subject to recording all the electronic data obtained from the video recording.

Verification means comprise optical scanning means and authenticity control means comprising a second algorithm of artificial intelligence, capable of determining the existence and authenticity of the at least one identification document security measure. These security measures may be made up of cryptograms, elements of variable optics, such as holograms, and/or watermarks printed on the photograph of the identification document.

According to a preferred embodiment, the electronic data obtained by the interface comprise a high definition video, the registration, credentials and metadata taken from the document, the images from the front and back of the document, the image of the person, a biometric examination, as well as a detection of the existence of blinking, the existence of movement of the facial features and the existence of a single person at the recording. These movements of the facial features are detected automatically and without friction during the video identification system recording process.

According to a preferred embodiment, the at least one security measure of the document comprises images and/or variable optics ink and/or at least one cryptogram.

This specification also relates to a remote video identification method for identifying physical people, by a remote video identification system for identifying physical people such as the one defined above. This method has the following steps.

A first step of connection of a physical person to the system identification software and remote video identification request of an identification document via his/her device.

A second step consisting of the data collection and automatic verification, wherein said data collection consists of the video recording and automatic scanning of the front and back of the document and the image of the physical person and wherein, the automatic verification is carried out by the first system software algorithm, for the identification of said front and back of the document and confirmation that the person is alive and not under duress and, via verification means, for the authentication of the security measures.

Finally, the identification method has a third step for obtaining a conclusion regarding the document identification.

According to a preferred embodiment, when the conclusion obtained from the document identification is the authenticity thereof, the interface issues an authentication certificate and records all the electronic data from the process and electronically seals the same in a traceability module.

With the remote video identification system for identifying physical people and the remote video identification method for identifying physical people by said system herein proposed, a significant improvement of the state of the art is obtained.

This is so since a security level equivalent to an in-person identification process is achieved with both this system and the method applying the system, and it is possible to arrive at a reliable conclusion about the document's authenticity as well as about the fact that the person claiming the identification is alive, is not under duress and his/her identity coincides with the one in the document analyzed and thus with the identity claimed.

This is a method fully applied remotely via the Internet, thus not needing the person's physical presence, and thus being much more comfortable and practical.

Other significant advantage is the fact that the system connection interface operates at the user's own device, with no need to make use of any type of particular hardware exclusively made for this system and method, and only using a software connected to the net, which can be accessed via any device with Internet access and with a browser or isolated native app. Therefore, the interface operates for any physical person in any country, with any identification document and at any time.

The system interface is highly interoperable, by connecting via web pages or native apps installed in devices from users in a very simple way.

This system records all electronic data from the application method thereof and electronically seals the data for their traceability. Thus, the appropriate electronic evidence, which in the event of any doubt allow to demonstrate that the identification process has been produced at a certain time and it has not been subsequently manipulated, are created and recorded. Once this information is recorded in the system, it is available to the competent authorities, if relevant.

The video creation process is made on streaming and each one of its frames is treated and recorded under this system's technology control, thus avoiding the possibility of the identification video being recorded in the customer's device and then being sent for verification thereof, which could lead to multiple fraud cases.

All verifications, including the verifications of all the identification document security measures: images, cryptograms, variable optics ink, integrity, MRZ construction integrity, as well as the detection that the person is alive and not under duress at the time of identification, correspond to a high level of reliance with the identity claimed in the identification document, and make it possible to reach to the conclusion that said identity claimed by the person is true, with a high level of reliance, in a completely automatic way, and with a technical and legal security level equal to or higher than the identification made in person.

It is therefore an easy to use, practical, effective video identification system with a high level of security, while the application method thereof is simple, comfortable once fully made remotely, and very safe.

### Brief Description of the Drawings

With the aim of a better understanding of the features of the invention, according to a preferred example practical embodiment thereof, a series of drawings is provided as an integral part of said description, where the following has been represented in an illustrative and not exhaustive way:

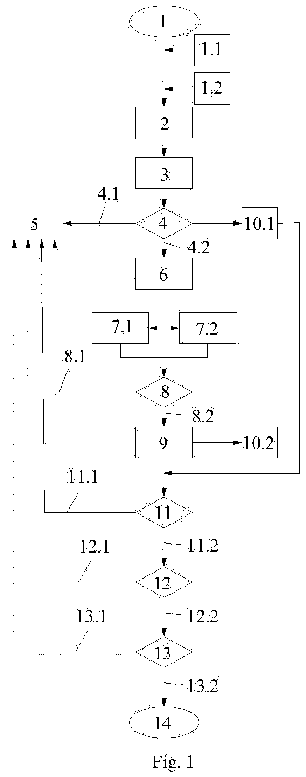

Figure 1 - It shows a block diagram of the remote identification method for identifying physical people, through a remote video identification system for identifying physical people, for a preferred embodiment of the invention.

### Detailed Description of a Preferred Embodiment of the Invention

In view of the provided figure, it can be observed how in a preferred embodiment of the invention, the remote video identification system for identifying physical people, comprising detection means of an identification document of said physical person, this being any document which has a photograph of said physical person and at least one security measure and verification means of said identification document herein provided, comprises a connection interface between an identification software operating at the browser of a mobile device of the physical person connected to the Internet.

The detection means comprise at least one camera associated with said device of the person, subject to making a video recording of the identification document and of the features of the physical person's face, wherein the system software comprises a first algorithm suitable to obtain electronic data of said recording to take a first biometric pattern (10.1) of the document photograph, a second biometric pattern (10.2) of the physical person's face and a confirmation that the person is alive at the time of recording and not under duress.

In this preferred embodiment of the invention, the device of the person using the system is a smartphone having a camera. In other embodiments, it can be a device composed of a tablet, a pc or laptop or a smart TV with Internet connection.

The system interface is subject to recording all electronic data obtained from the video recording made with the camera.

Moreover, security measures for verification comprise optical scanning means and authenticity control means comprising a second algorithm of artificial intelligence, capable of determining the existence and authenticity of the at least one identification document security measure.

In this preferred embodiment of the invention, the electronic data obtained by the interface are comprised of a high definition video, credentials and metadata taken from the document, the images from the front and back of the document, the image of the person, a biometric examination, as well as a detection of the existence of blinking, the existence of movement of the facial features and the existence of a single person at the recording.

Moreover, in this preferred embodiment of the invention, the document has more than one security measure, wherein said measures comprise an image at the background of the document, the use of variable optics ink to make marks therein and a cryptogram.

In this specification, there is also a remote video identification method for identifying physical people, by a remote video identification system for identifying physical people such as the one defined above.

Said identification method has the following steps.

A first step of connection (1) of a physical person to the system identification software and remote video identification request of an identification document, via his/her device, which in this case is a mobile device.

In this preferred embodiment of the invention, after this first step of connection and identification request, an acceptance of the system use terms and conditions (1.1) is made by said physical person, and an acceptance of use of the camera (1.2) of his/her device to start recording.

In case the user accepts the terms and conditions of use and the use of the camera of his/her device, the method proceeds to the second step consisting of a data collection and automatic verification (2), wherein said data collection consists of the video recording and automatic scanning of the front and back of the document and the image of the physical person and wherein, the automatic verification is carried out by the first software algorithm for the identification of said front and back of the document as well as the confirmation that the person is alive and not under duress and, via verification means, for the authentication of security measures.

This step of collection and automatic verification (2) comprises a series of automatic system steps starting with an interface request to the physical person showing the front (3) of the document. The first system software algorithm detects such front, the type of document, the issuing country and makes de verification (4) thereof via image automatic comparison.

The first algorithm takes the photograph from the document and makes a first biometric pattern (10.1) of said photograph.

The first algorithm is raised if the verification is correct or not. If the result is negative (4.1), the interface records the cause of rejection (5) and reports the user.

In case verification is correct (4.2), the method proceeds with the next step where the physical person is requested to show the back (6) of the identification document. The first algorithm automatically detects said back of the document and obtains, via character optical recognition, the information of the MRZ code and/or the 2D/3D barcode or the QR code and makes the construction integrity verification (7.1) thereof. Likewise, it makes the verification via image comparison (7.2) of said document particular code, which in this preferred embodiment of the invention is a MRZ code, through its security measures.

Then the first algorithm makes the verification (8) of the back of the document and the issue of whether the verification is correct or not is raised. If verification is incorrect (8.1), the interface records the cause of rejection (5) and reports the user.

In case verification is correct (8.2), the identification method proceeds with another step consisting of confirming that the person is alive (9) and not under duress at the time of document video identification, making a second biometric pattern (10.2) of the person and wherein the first system software algorithm compares (11) said second biometric pattern (10.2) with the first biometric pattern (10.1) obtained from the document photograph and obtains electronic data determining the detection of the existence of blinking, the existence of movement of the facial features and the existence of a single person at the recording.

If the comparison result (11) is incorrect (11.1) since the person is not alive and or under duress, the interface records the cause of rejection (5) and reports the user.

In case the comparison (11) is correct (11.2), it proceeds to the next step consisting of the authentication of the security measures (12) of the identification document, via verification means of this system made up of optical scanning means and the second algorithm of artificial intelligence. This second algorithm is capable of determining the existence and authenticity of the identification document security measures, which in this preferred embodiment of the invention are made up of an image, variable optics ink, and a cryptogram.

If the security measures authentication result (12) is incorrect (12.1) since these are not true, the interface records the cause of rejection (5) and reports the user.

In case these are correct (12.2) it proceeds to the last step of the identification method, which is to obtain a conclusion (13) whether the identification document is authentic (13.2) or false (11.1). The first algorithm of the software determines the meaning of the conclusion.

If the conclusion to which the first algorithm reaches is the authenticity (13.2) of the document, the interface issues an authentication certificate (14), records all electronic data of the process and seals them electronically in a traceability module.

In case the verification conclusion is incorrect (13.1), the interface records the rejection (5) and reports this to the user.

The embodiment described only constitutes an example of the present invention; therefore specific details, terms and phrases used in the present specification are construed without limitation, only as a basis for the claims and as a representative basis providing an accessible description as well as enough information to the skilled in the art in order to practice the present invention.

With the remote video identification system for identifying physical people and the remote video identification method for identifying physical people by said system herein proposed, relevant improvements of the state of the art are obtained.

Therefore, what is offered is a service oriented to official agencies and financial entities or companies requiring high security in identification, whose mission is to facilitate the process of registering and remotely verifying the identity of physical people based on a novel technology of a telematic identity verification through a remote video operating in any device connected to the Internet with an installed web browser and a camera.

The level of security is equivalent to the identification process in person, arriving at a reliable conclusion on the identity that the person claims from the online channel and in real time, in a controlled process from start to end.

It is a system capable of automatically detecting and verifying, with a high-level of reliability, the authenticity of the identity document (identity documents, standard ICAO TD1, TD2, TD3 passports) of all countries. Besides, it detects the person and verifies that the person is alive at the time of identification, with a high-level of reliability. It verifies that the living person claiming his/her identity and the identity extracted from an authentic source issued by a government and with its security measures, is the same.

A great advantage is that it operates remotely on the Internet, the physical presence of the person not being necessary.

Another important aspect of this video identification system is that the solution operates in the customer's own device (pc, tablet, smart telephone) with no need to use or install any additional hardware specific element.

The solution works for any physical person in any country, with any identification document and at any time.

Likewise, the method allows generating and recording timely electronic data (high definition video, credentials and metadata taken from the identity document, ip addresses of the machine from where the identification is carried out, images of the front and back of the document), since all events produced in the system remain traceable by electronic signature and time stamp. This proves that the identification process was produced at a certain time and that it has not been subsequently manipulated.

This information is recorded in the system and at the disposal of the appropriate authorities in case of being relevant.

All this generates an identification system and method, which is simple, since it may be used from any mobile device connected to the Internet, of any person, it being completely safe and comfortable to use remotely.

## Claims

1. Remote video-identification system for identifying physical people, comprising detection means of an identification document of said physical person, this being any document which has a photograph of said physical person and at least one security measure, and verification means of said identification document, **characterized in that** it comprises
- a connection interface between a system identification software operating in the browser of an Internet-connected device of the physical person;
- wherein the detection means comprise at least one camera associated with said device of the person, susceptible to making a video recording of the identification document and of the features of the face of the physical person, and wherein the system software comprises a first algorithm capable of obtaining electronic data of said recording, to obtain a first biometric pattern (10.1) of the document photograph, a second biometric pattern (10.2) of the face of the physical person and a confirmation that the person is alive at the time of recording and not under duress;
- wherein the interface is susceptible to recording all electronic data obtained from the video recording, and;
- wherein verification means comprise optical scanning means and authenticity control means consisting of a second algorithm of artificial intelligence, capable of determining the existence and authenticity of the at least one security measure of the identification document.

2. Remote video-identification system for physical people according to claim 1, **characterized in that** the electronic data obtained by the interface are comprised of a high definition video, the registration, credentials and metadata taken from the document, the images of the front and back of the document, the image of the person, a biometric examination, as well as a detection of the presence of blinking, the presence of movement of the facial features and the presence of a single person at the recording.

3. Remote video-identification system for physical people according to any one of claims 1 and 2, **characterized in that** the at least one security measure of the document is made up of images and/or variable optical ink and/or at least one cryptogram.

4. Remote video-identification method of physical people, by a remote video-identification system of physical people as the one defined in claims 1 to 3, **characterized in that** it comprises the following steps
- connection (1) of a physical person to the identification software of the system and remote video-identification request of an identification document by the device;
- collection and automatic verification of data (2), wherein the collection of said data consists in the video recording and automatic scanning of the front and back of the document and the image of the physical person, and wherein the automatic verification (4) is carried out by the first software algorithm, for the identification of said front and back of the document and checking that the person is alive and not under duress and, via verification means, for the authentication of security measures, and;
- obtaining a conclusion (13) regarding the identification of the document.

5. Remote video-identification method of physical people according to claim 4, **characterized in that** when the conclusion obtained from the document identification is the authenticity (13.2) thereof, the interface issues an authentication certificate (14), records all the electronic data from the process and electronically seals the same in a traceability module.
